# EUROPEAN PATENT APPLICATION

(11) **EP 3 909 842 A1**
(43) Date of publication of application: **17.11.2021**
(21) Application number: 21159802.4
(22) Date of filing: 28.02.2021
(51) Int. Cl.: B63H 23/18, B63H 21/20

(54) **NAUTICAL PROPULSION INBOARD SYSTEM**

(30) Priority: 12.05.2020 IT 202000010726
(71) Applicant: Huracan Marine S.r.l., 33050 Ronchis (UD) (IT)
(72) Inventor: Scarpa, Eros, 33050 Ronchis (UD) (IT); Moro, Franco, 33050 Ronchis (UD) (IT)
(74) Representative: Leganza, Alessandro

(57) **Abstract**

Object of invention is a nautical propulsion inboard system comprising an endothermic engine, an electric motor and a particular coupling system.

## Description

The present invention relates to a nautical propulsion inboard system.

Inboard propulsion systems consisting of a fuel endothermic engine mounted within the vessel, from which a transmission device departs, and that through suitable kinematics drive a propeller placed at the aft external end of the boat, are known.

However, such known engines have the drawback that, due to their high polluting power, they cannot be used in particular places where the use of fuel is not allowed.

An objective of the invention is to eliminate such drawbacks and making a improved nautical propulsion system which can operate both with fuel and with other less polluting power-types.

Such objective is achieved according to the invention through a nautical propulsion inboard system as described in claim 1.

The present invention is further illustrated below with reference to the attached drawings wherein:
- figure 1: shows an exploded perspective view of a nautical propulsion system according to the invention,

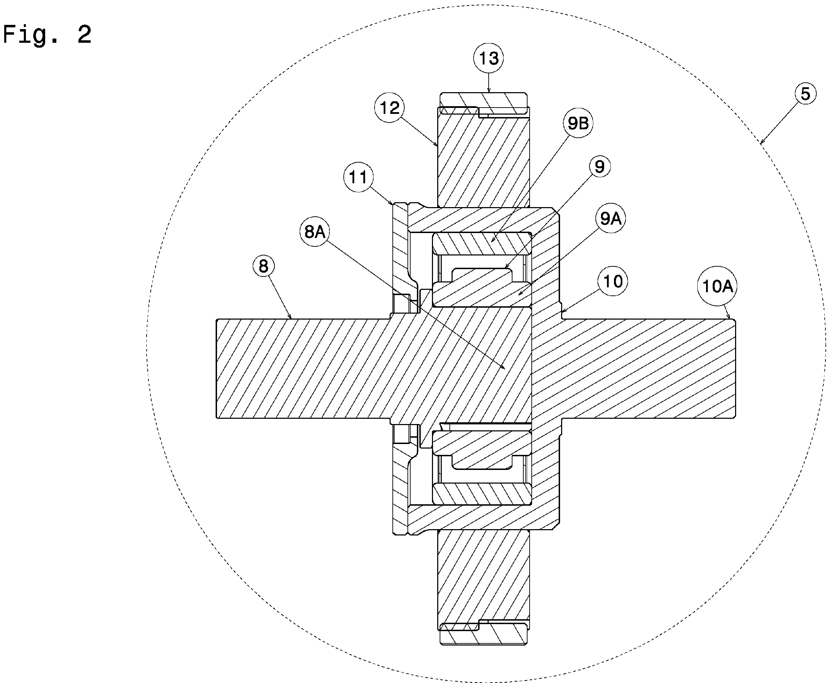

- figure 2: shows a section view of the detail of the only free-wheel machinery transmitting the motion to the propeller.

As showed in the figures of the nautical propulsion system according to the invention, it comprises a fuel-supply endothermic engine 1 fuel powered with the transmission device 3 of its own motion connected to a transmission shaft 8 whose other ends 8A is integral with a free-wheel 9 machinery 5 housed within a seating formed by a lid 11 and a flange 10 whose end 10A is in turn connected to a rotation shaft 6 of the propeller 7. A pulley 12 is shrinked on the flange 10 which, in turn, is kinematically connected by a transmission belt 13 and a second pulley 14 shrinked on the shaft 4 of an electric motor 2 electrically connected to an storage battery 15.

The free wheel 9 comprises two crowns, an inner one 9A and an outer one 9B. The first crown 9A always drags the second one 9B in engine 1 driving stage; vice versa the latter 9B, when differently dragged, is capable of freely disengaging from the first one 9A without any need of further mechanical, electric, electromechanical or hydraulic measures.

The operating of the nautical propulsion system according to the invention is the following:
with the inboard engine 1 operation, the transmission device 3 rotates and through the free wheel machinery 5 puts in rotation the rotation shaft 6 of the propeller 7.

At the same time, through the rotation of the flange 10 and then of the pulley 12, the belt 13 is rotated which, through the pulley 14 and the shaft 4, puts in rotation electric motor 2 which in turns charges the battery 15 until its complete charging. When the vessel is in a zone wherein the use of the endothermic engine 1 is forbidden, this is stopped. After this action, the battery 15 drives the electric motor 2 that puts in rotation, through the transmission belt 13, the free wheel machinery 5 which in turns puts in rotation the rotation shaft 6 of the propeller 7. When engine 1 is stopped, the machinery 5 allows the disengage (disconnection) from the device 3 thus maintaining connected the transmission shaft 4 to the shaft 6 of the propeller 7 allowing the electric motor 2 to continue to provide propulsion to the propeller 7.

Therefore, an object of the present invention is a nautical propulsion inboard system characterized by comprising:
- an endothermic engine (1),
- a shaft (8) connected to the endothermic engine (1),
- un free wheel (9) machinery (5) formed by a portion (8) connected to the endothermic engine (1) and by a portion (10) connected to the shaft (6) of a propeller (7),
- an electric motor (2) connected through a kinematics to the portion (10),
- a battery (15) rechargeable from the electric motor (2),
the two portions (9,10) being rotary coupled from each other in the rotation stage of the shaft (8) and decoupled when the shaft (8) is stationary, the electric motor (2) dragging, when the shaft (8) is stationary, the portion tan (10) through the kinematic machinery and accordingly rotating the shaft (6) of the propeller (7).

Preferably, the nautical propulsion inboard system is characterized in that the kinematic consists of pulleys (14) and (12) and a belt (13).

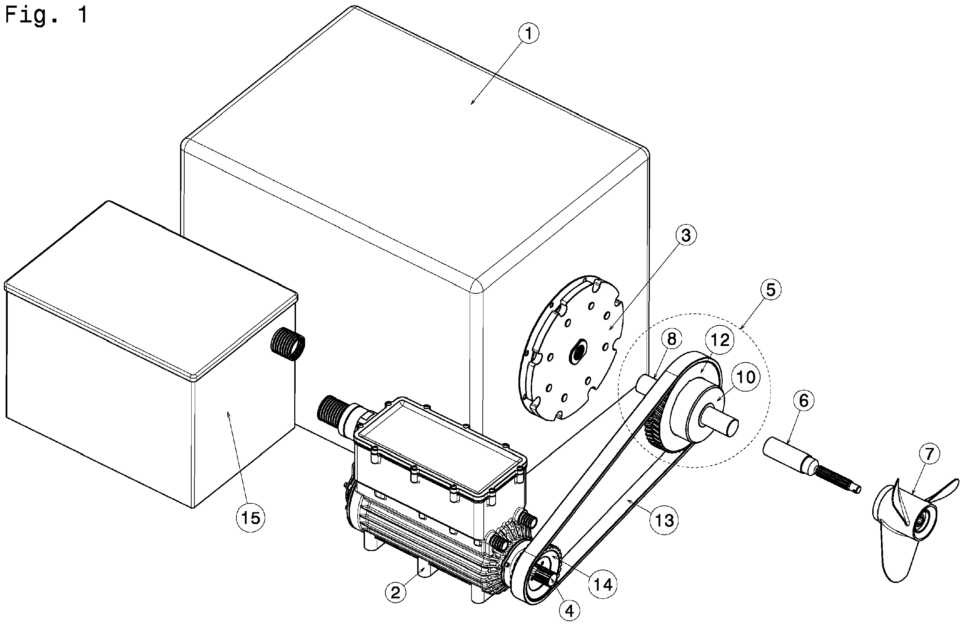

The nautical propulsion inboard system of the present invention has the significant advantage to be particularly short, i.e. the size provided in terms of length of the endothermic engine (1) and the electric motor (2) is lower to that of other hybrid systems to date known. Such advantage is achieved in that, the electric motor (2) e disposed, through a machinery (5), in parallel to and on the side of the endothermic engine (1) (see fig. 1) and not coaxially to it as in the known systems. Said configuration allows a saving in terms of length size of the hybrid propulsion system in the order of 10-30 cm which is what is necessary and sufficient in order to allow the inboard system of the invention to be adapted also to already existing boats, for example to the venetian water taxi, where the space between the endothermic engine and the stern of the boat is predetermined, modest and not changeable.

Therefore, the inboard system of the invention, or how constructively made, allows to be advantageously used also to boats where it would not be possible to coaxially mount an electric motor to the endothermic engine due to reasons of size. The nautical propulsion inboard system of the present invention has a length, coaxially measured with respect to the axis of the propeller, comprised between 10 and 20 cm more than the length of the endothermic engine (1), always coaxially measured with respect to the axis of the propeller.

## Claims

1. Nautical propulsion inboard system **characterized by** comprising:
- an endothermic engine (1),
- a shaft (8) connected to the endothermic engine (1),
- a free wheel (9) machinery (5) formed by a portion (8) connected to the endothermic engine (1) and a portion (10) connected to the shaft (6) of a propeller (7),
- an electric motor (2) connected through a kinematic to the portion (10),
- a battery (15) rechargeable from the electric motor (2),
the two portions (9,10) being rotary coupled to each other in rotation stage of the shaft (8) and decoupled when the shaft (8) is stationary, the electric motor (2) dragging, when the shaft (8) is stationary, through the kinematic machinery the portion (10) and accordingly rotating the shaft (6) of the propeller (7).

2. System according to claim 1, **characterized in that** the kinematic consists of pulleys (14) and (12) and a belt (13).

3. System according to any one of claims from 1 to 2, **characterized by** having a length, coaxially measured with respect to the axis of the propeller, comprised between 10 and 20 cm more than the length of the endothermic engine (1), also this being coaxially measured with respect to the axis of the propeller.

4. Boat comprising the nautical propulsion inboard system according to anyone of the claim from 1 to 3.
